(19) Europäisches Patentamt
European Patent Office
Office européen des brevets

(11) **EP 3 132 251 B1**

(12) **EUROPEAN PATENT SPECIFICATION**

(45) Date of publication and mention
of the grant of the patent:
**06.01.2021 Bulletin 2021/01**

(51) Int Cl.:
***G01N 21/85*** *(2006.01)*     ***G01N 21/25*** *(2006.01)*
***G01N 21/03*** *(2006.01)*

(21) Application number: **15734248.6**

(86) International application number:
**PCT/IT2015/000094**

(22) Date of filing: **01.04.2015**

(87) International publication number:
**WO 2015/155795 (15.10.2015 Gazette 2015/41)**

(54) **APPARATUS FOR PERFORMING OPTICAL MEASUREMENTS ON DYE BATHS**

VORRICHTUNG ZUR DURCHFÜHRUNG OPTISCHER MESSUNGEN BEI FÄRBEBÄDERN

APPAREIL DE RÉALISATION DE MESURES OPTIQUES SUR DES BAINS DE TEINTURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2014 IT FI20140083**

(43) Date of publication of application:
**22.02.2017 Bulletin 2017/08**

(73) Proprietor: **Tecnorama S.r.l.**
**59100 Prato (IT)**

(72) Inventor: **SCATIZZI, Mario**
**51030 Pistoia (IT)**

(74) Representative: **Mincone, Antimo**
**Viale Europa 101**
**50126 Firenze (IT)**

(56) References cited:
**US-A- 4 893 934      US-A1- 2004 156 036**
**US-A1- 2005 133 724      US-A1- 2006 152 730**
**US-A1- 2008 289 125      US-A1- 2011 271 463**

## Description

The present invention relates to an apparatus for performing optical measurements on dye baths.

It is known that the Lambert-Beer law, also known as the law of Beer-Lambert Law or Beer-Lambert-Bouguer law, is an empirical relationship that correlates the amount of light absorbed by a medium to the chemical nature, the concentration and the thickness of the medium traversed by the light. When a beam of light (monochromatic) of intensity $I_0$ goes through a layer of a medium of a thickness 1, a part of it is absorbed by the medium itself and a part of it is transmitted with residual intensity $I_1$. The ratio between said intensities is expressed by the following relationship:

$$\frac{I_1}{I_0} = e^{-k\lambda l} = T = e^{-A}$$

where $k\lambda$ is the absorption coefficient (which is a constant typical of the medium and depends on the wavelength $\lambda$) and 1 is the thickness of the solution traversed by the light.

By defining the transmittance (T) as the ratio $I_1/I_0$ and as absorbance (A) the opposite of the natural logarithm of the transmittance, the law assumes an even more simplified form:

$$A = k_\lambda l$$

that for a solution is simplified as follows:

$$A = \varepsilon_\lambda l \, M;$$

where $\varepsilon_\lambda$ is the molar extinction, M is the molarity of the solution and 1 is the geometric path. The value of $\varepsilon_\lambda$ is considered constant for a given substance at a given wavelength, although it may vary slightly with temperature. Moreover, its constancy is ensured only within a given range of concentrations, above which the linearity between absorbance and concentration can be affected by chemical and physical phenomena (for example the precipitation of the colored chemical species). The measurement of the absorbance of chemical solutions at typical wavelengths is the principle on which the spectrometry analysis is based. For the control of the exhaustion of the dyes in the dye baths utilized for dyeing textile materials, use is made of control cells, in which is entered the dyeing bath to control, having variable thickness, or control cells with mobile walls, which are particularly complex and therefore expensive in relation to the current production requirements

US2006/152730A1 discloses an optical sensor for determining particle and/or dye concentrations in liquid or gaseous media and to a method for operating the same. The optical sensor comprises at least one measuring head. The measuring head consists of an emitter unit with a semiconductor emitting element, which emits visible emission light beams, and with a receiver unit with a semiconductor receiving element. The portion of the emission light beams, which pass through an absorption section containing liquid or gaseous medium, is guided onto the receiving element. An evaluating unit is coupled to the measuring head via electric leads, and the received signals, which are present at the output of the semiconductor receiving element, are evaluated inside said evaluating unit in order to determine the particle or die concentration. US2004/156036A1 discloses a method for optically measuring black carbon in the atmosphere an aerosol particle collection area of a filter tape is continually illuminated by an illumination source with light of one or more wavelengths. Transmitted and reflected light fractions are measured at several precisely defined angles or angle ranges, such as of 0°, 12° to 140° and 165 to 180° by means of photodetectors arranged correspondingly relative to the illumination source, achieving maximum symmetry for the angles to be measured. The loading of the filter tape collection area with light absorbing aerosol material is continually determined from the change in the optical properties of the collection area with the aid of known algorithms from transmissivities and reflectivities as detected. US2005/133724A1 discloses a system for conducting a polymerase chain reaction (PCR) assay upon a collection of samples is disclosed. The PCR assay is performed by absorption detection. The system includes a multi-well plate which is adapted to retain a collection of sample wells. This system includes a thermal cycler for the multi-well plate. The system additionally includes a collection of photodetectors, and a corresponding number of light sources. The light sources are positioned such that light emitted from each of the respective light sources passes through a corresponding well retained in the multi-well plate and to a corresponding photodetector. The system also includes a processor or other means for analyzing the output signals from the photodetectors. In certain versions of the system, ultra-violet light is used.

The present invention relates, in particular, to an apparatus that allows to correlate the aforementioned variables in a particularly simple, economical and effective way for applying the Lambert-Beer law to solutions containing coloring agents and used for dyeing textile materials in order to perform an assessment of the exhaustion of the dyes in the same solutions.

This result is achieved, according to the present invention, by adopting the idea of making an apparatus having the characteristics indicated in claim 1. Other features of the present invention are object of the dependent claims.

An apparatus in accordance with the present invention is particularly simple from the constructive point of view, economic, and reliable. Furthermore, the optical readings obtained using the present apparatus are more accurate.

These and other aspects and advantages of the present invention will be best understood by anyone skilled in the art thanks to the following description and to the attached drawings provided by way of example but not to be considered in a limiting sense, in which:

- Fig.1 is a diagram showing an apparatus according to the present invention;
- Fig.2 is a diagram showing an apparatus according to a further embodiment the present invention.

Reduced to its essential structure and with reference to the accompanying drawings, an apparatus according to the present invention comprises a cell having a constant thickness or a variable thickness associated with one or more light emission and reception points positioned in correspondence of the various thicknesses, wherein each light emission point comprises a plurality of colored LEDs that cover the spectrum of visible light, wherein each light receiving point comprises a photodiode, and wherein to each group of light emitting LEDs is associated a photodiode which detects the light emitted by the light emitting LEDs of the group.

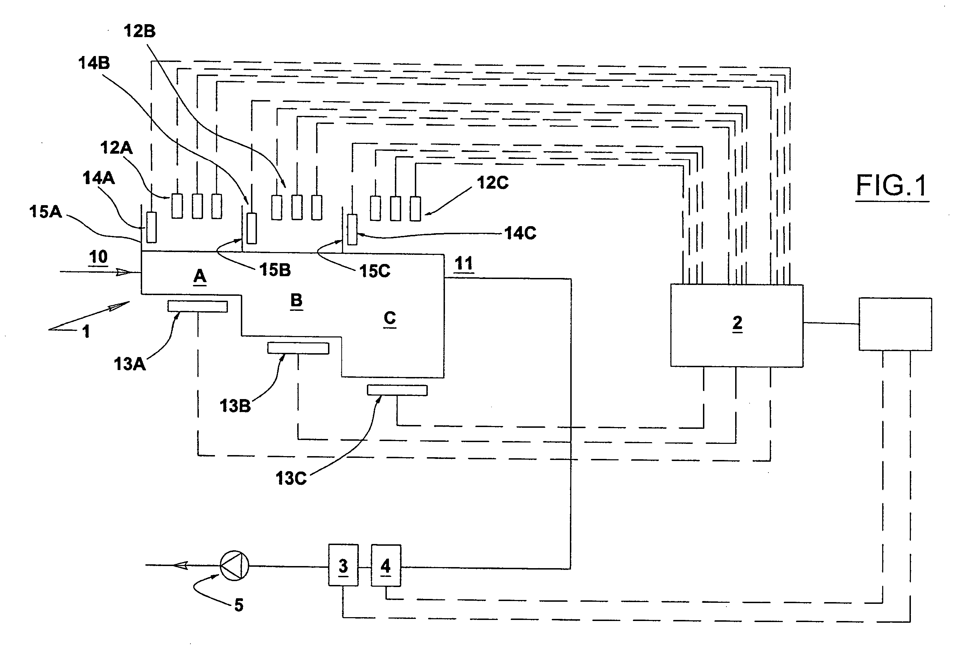

With reference to the example shown in Fig.1, the cell (1) has three different thicknesses, being formed by a succession of three zones (A, B, C) gradually increasing in height from an input side (10) for the solution to be controlled towards an outlet side (11) from which the same solution flows out. On each of said zones (A, B, C) of the cell (1) is arranged and acting a set of three light emitting LED (12A, 12B, 12C) and, on the opposite side (below the lower base of the cell 1 in Fig.1), is arranged and acting a corresponding light-receiver photodiode (13A, 13B, 13C). Said photo-emitters and said photodiodes are located outside of the cell (1). The walls of the latter where the photo-emitters and photodiodes are positioned are transparent to the light emitted by the photo-emitters. Each of the photo-emitters emits light of a predetermined color and each photo-emitters of each set produce, in cooperation with each other, visible light. For example, said photo-emitters can emit R, G, B light. Each set of photo-emitters (12A, 12B, 12C) is associated with an additional photodiode (14A, 14B, 14C) placed on the same side of the same photo-emitters of the set with respect to the cell (1) (above the upper base of the cell 1 in Fig.1). Moreover, a screen (15A, 15B, 15C) can be provided behind each of the additional photodiodes (14A, 14B, 14C).

Fig.1 shows also a programmable unit (2) which activates the light emitting LEDs (12A, 12B, 12C) and receives the signals of the photodiodes (13A, 13B, 13C) and (14A, 14B, 14C) and processes them according to a program based on the law of Lambert-Beer. The diagram of Fig.1 also shows sensors (3,4) for controlling the pH and conductivity values of the solution that flows through the cell (1) and a recirculation pump (5) intended to re-enter the solution in the dyeing machine from which it is taken. The solution fed into the cell (1) is, for example, a dyeing bath drawn off by a dyeing machine (known per se) and then put back in the same dyeing machine. The multiplicity of the thicknesses of the cell (1) allows to perform a more effective control even if such thicknesses are individually constants, taking into account the fact that when a solution is more concentrated, i.e. contains larger amounts of dyes, the thickness of the cell must be smaller to allow light emitted by the light emitters to reach the other side of the cell in amount sufficient to be intercepted by the respective photodiode and subsequently processed.

The additional photodiode (14A, 14B, 14C) associated with the photo-emitters (12A, 12B, 12C) allows to send to the programmable unit (2) signals exactly corresponding to the intensity of light emitted by the photo-emitters.

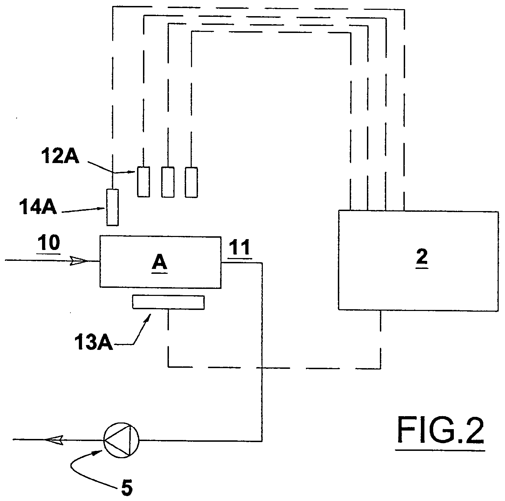

Figure 2 shows a simplified version of the apparatus, in which the cell (1) has only one zone (A) of constant thickness. This version of the apparatus can serve, for example, to control the transparency of the washing water introduced into the dyeing machine.

In more general terms, an apparatus adapted to perform optical measurements on dye baths according to the present invention, comprises a cell (1) with an inlet (10) and an output (11) to allow the dye bath to flow through the same cell (1), light emitting means (12A, 12B, 12C) adapted to produce a light intended to pass through the dyeing bath and placed in a predetermined area of the cell (1), light-detecting means (13A, 13B, 13C) adapted to intercept the light produced by said light emitting means and placed on the opposite side of the cell with respect to the latter, and programmable means (2) adapted to drive said light emitting means (12A, 12B, 12C) and to process electrical signals emitted said light-detecting means (13A, 13B, 13C) on the basis of a predetermined processing program, and to said light emitting means (12A, 12B, 12C) are associated additional light-detecting means (14A, 14B, 14C) placed on the same side of the light emitting means (12A, 12B, 12C) with respect to the cell (1) and also connected to said programmable means (2) that receives the signals emitted by the additional light-detecting means and processes them according to the predetermined processing program.

Thus, the programmable means (2) receive, through the additional light-detecting means (14A, 14B, 14C), electric signals that can be compared with the electric signals emitted by the light-detecting means (13A, 13B, 13C) on the basis of the predetermined processing program and that correspond to the light emitted by the light emitting means (12A, 12B, 12C). It is noted that without said additional light-detecting means (14A, 14B, 14C) the processing unit (2) would process the signals coming from the light-detecting means (13A, 13B, 13C) assuming that the light emitted by the light emitting means (12A, 12B, 12C) remains constant over the time. This assumption is incorrect because, due to their structural and functional characteristics, the LEDs emit a light that is not constant over the time (for example, it is influenced by the temperature). In other words, the arrangement disclosed above ensures that the measurement is executed on the basis of real data, not on the basis of assumptions.

In the examples described above the light emitting means (12A, 12B, 12C) are constituted by groups of individual LED diodes and the cell (1) can have either a constant height or a not constant height so as to be ideally divided into several zones (A, B, C) having different heights. Furthermore, in the above examples the apparatus is inserted in a closed circuit which includes the dyeing machine so as to allow to perform optical measurements without interrupting the dyeing process.

From the foregoing description are also clear the advantages offered by the present apparatus, both in terms of construction simplicity and in economic terms, which implies the further advantage to allow a greater diffusion than the more expensive conventional devices and, therefore, to allow for a greater extend control of dye baths also in industry and not only in laboratories.

It is also evident that the present apparatus can be equally advantageously used to control the color of liquids other than those mentioned above, such as the color of beverages, perfumes, etc.

Still another advantage lies in the simplicity of the connection of the apparatus to the dyeing machine that should not be modified.

In practice the details of execution may vary in any equivalent way as for what concerns the arrangement and the conformation of the individual elements described or illustrated, without thereby departing from the scope of the adopted solution and thus remaining within the limits of the protection conferred by the this patent.


**Claims**

1. Apparatus adapted to perform optical measurements on dye baths, comprising a cell (1) with an inlet (10) and an output (11) allowing dye baths to flow through the same cell (1), light emitting means (12A, 12B, 12C) adapted to produce a light intended to pass through the dyeing bath and placed in a predetermined area of the cell (1), light-detecting means (13A, 13B, 13C) adapted to intercept the light produced by said light emitting means and placed on the opposite side of the cell with respect to the latter, and programmable means (2) adapted to drive said light emitting means (12A, 12B, 12C) and to process electrical signals emitted said light-detecting means (13A, 13B, 13C) on the basis of a predetermined processing program, **characterized in that** to said light emitting means (12A, 12B , 12C) are associated additional light-detecting means (14A, 14B, 14C) placed on the same side of the light emitting means (12A, 12B , 12C) with respect to the cell (1) and also connected to said programmable means (2) that is adapted to receive the signals emitted by the additional light-detecting means and process them according to the predetermined processing program.

2. Apparatus according to claim 1 **characterized in that** said light emitting means (12A, 12B, 12C) are adapted to emit light in the visible spectrum.

3. Apparatus according to claim 1 **characterized in that** said light emitting means (12A, 12B, 12C) are LED devices.

4. Apparatus according to claim 1 **characterized in that** said light emitting means (12A, 12B, 12C) are constituted by groups of individual light emitting LEDs.

5. Apparatus according to claim 1 **characterized in that** said light-detecting means (13A, 13B, 13C) and said additional light-detecting means (14A, 14B, 14C) are photodiodes.

6. Apparatus according to claim 1, **characterized in that** the said additional light-detecting means (14A, 14B, 14C) are shielded.

7. Apparatus according to claim 1 **characterized in that** the said cell (1) is divided into several zones (A, B, C) of increasing height starting from the inlet section (10) and proceeding towards the outlet section (11) of the dyeing bath.

8. Apparatus according to claim 1 **characterized in that** the said cell (1) has a constant height.

9. Apparatus according to claim 1 **characterized in that** the inlet (10) and the outlet (11) of said cell (1) are connected in a closed circuit with a dyeing machine.


**Patentansprüche**

1. Vorrichtung, die angepasst ist, um optische Messungen an Färbebädern durchzuführen, umfassend eine Zelle (1) mit einem Einlass (10) und einem Auslass (11), die es ermöglichen, dass Färbebäder durch dieselbe Zelle (1) strömen, lichtemittierende Mittel (12A, 12B, 12C), die angepasst sind, um ein Licht zu erzeugen, das durch das Färbebad strömen soll, und die in einem vorbestimmten Bereich der Zelle (1) angeordnet sind, lichterfassende Mittel (13A, 13B, 13C), die angepasst sind, um das von den lichtemittierenden Mitteln erzeugte Licht abzufangen, und die auf der gegenüberliegenden Seite der Zelle in Bezug auf die Letztere angeordnet sind, und programmierbare Mittel (2), die angepasst sind, um die lichtemittierenden Mittel (12A, 12B, 12C) anzutreiben und elektrische Signale zu verarbeiten, die von den lichterfassenden Mitteln (13A, 13B, 13C) auf Basis eines vorbestimmten Verarbeitungsprogramms emittiert werden, **dadurch gekennzeichnet, dass** den lichtemittierenden Mitteln (12A, 12B, 12C) zusätzliche lichterfassende Mittel (14A, 14B, 14C) zugeordnet sind, die in Bezug auf die Zelle (1) auf derselben Seite der lichtemittierenden Mittel (12A, 12B, 12C) angeordnet und auch mit den programmierbaren Mitteln (2) verbunden sind, die angepasst sind, um die von den zusätzlichen lichterfassenden Mitteln emittierten Signale zu empfangen und sie gemäß dem vorbestimmten Verarbeitungsprogramm zu verarbeiten.

2. Vorrichtung nach Anspruch 1, **dadurch gekennzeichnet, dass** die lichtemittierenden Mittel (12A, 12B, 12C) angepasst sind, um Licht im sichtbaren Spektrum zu emittieren.

3. Vorrichtung nach Anspruch 1, **dadurch gekennzeichnet, dass** die lichtemittierenden Mittel (12A, 12B, 12C) LED-Vorrichtungen sind.

4. Vorrichtung nach Anspruch 1, **dadurch gekennzeichnet, dass** die lichtemittierenden Mittel (12A, 12B, 12C) aus Gruppen von einzelnen lichtemittierenden LEDs bestehen.

5. Vorrichtung nach Anspruch 1, **dadurch gekennzeichnet, dass** die lichterfassenden Mittel (13A, 13B, 13C) und die zusätzlichen lichterfassenden Mittel (14A, 14B, 14C) Fotodioden sind.

6. Vorrichtung nach Anspruch 1, **dadurch gekennzeichnet, dass** die zusätzlichen lichterfassenden Mittel (14A, 14B, 14C) abgeschirmt sind.

7. Vorrichtung nach Anspruch 1, **dadurch gekennzeichnet, dass** die Zelle (1) in mehrere Zonen (A, B, C) mit zunehmender Höhe, ausgehend vom Einlassbereich (10) bis zum Auslassbereich (11) des Färbebades, unterteilt ist.

8. Vorrichtung nach Anspruch 1, **dadurch gekennzeichnet, dass** die Zelle (1) eine konstante Höhe aufweist.

9. Vorrichtung nach Anspruch 1, **dadurch gekennzeichnet, dass** der Einlass (10) und der Auslass (11) der Zelle (1) in einem geschlossenen Kreislauf mit einer Färbemaschine verbunden sind.

**Revendications**

1. Appareil adapté pour effectuer des mesures optiques sur des bains de teinture, comprenant une cellule (1) avec une entrée (10) et une sortie (11) permettant à des bains de teinture de s'écouler à travers ladite cellule (1), des moyens d'émission de lumière (12A, 12B, 12C) adaptés pour produire une lumière destinée à passer à travers le bain de teinture et placés dans une zone prédéterminée de la cellule (1), des moyens de détection de lumière (13A, 13B, 13C) adaptés pour intercepter la lumière produite par lesdits moyens d'émission de lumière et placés sur le côté opposé de la cellule par rapport à ces derniers, et des moyens programmables (2) adaptés pour piloter lesdits moyens d'émission de lumière (12A, 12B, 12C) et pour traiter des signaux électriques émis par lesdits moyens de détection de lumière (13A, 13B, 13C) sur la base d'un programme de traitement prédéterminé, **caractérisé en ce qu'**auxdits moyens d'émission de lumière (12A, 12B, 12C) sont associés des moyens de détection de lumière (14A, 14B, 14C) additionnels placés sur le même côté des moyens d'émission de lumière (12A, 12B, 12C) par rapport à la cellule (1) et également connectés auxdits moyens programmables (2) qui sont adaptés pour recevoir les signaux émis par les moyens de détection de lumière additionnels et les traiter selon le programme de traitement prédéterminé.

2. Appareil selon la revendication 1 **caractérisé en ce que** lesdits moyens d'émission de lumière (12A, 12B, 12C) sont adaptés pour émettre une lumière dans le spectre visible.

3. Appareil selon la revendication 1 **caractérisé en ce que** lesdits moyens d'émission de lumière (12A, 12B, 12C) sont des dispositifs à DEL.

4. Appareil selon la revendication 1 **caractérisé en ce que** lesdits moyens d'émission de lumière (12A, 12B, 12C) sont constitués de groupes de DEL d'émission de lumière individuelles.

5. Appareil selon la revendication 1 **caractérisé en ce que** lesdits moyens de détection de lumière (13A, 13B, 13C) et lesdits moyens de détection de lumière (14A, 14B, 14C) additionnels sont des photodiodes.

6. Appareil selon la revendication 1, **caractérisé en ce que** lesdits moyens de détection de lumière (14A, 14B, 14C) additionnels sont protégés.

7. Appareil selon la revendication 1 **caractérisé en ce que** ladite cellule (1) est divisée en plusieurs zones (A, B, C) de hauteur croissante en partant de la section d'entrée (10) et en se déplaçant vers la section de sortie (11) du bain de teinture.

8. Appareil selon la revendication 1 **caractérisé en ce que** ladite cellule (1) a une hauteur constante.

9. Appareil selon la revendication 1 **caractérisé en ce que** l'entrée (10) et la sortie (11) de ladite cellule (1) sont connectées dans un circuit fermé à une machine de teinture.

FIG.1

FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006152730 A1
- US 2004156036 A1
- US 2005133724 A1